# FASCICULE DE BREVET EUROPEEN

(11) **EP 2 936 639 B1**
(45) Date de publication et mention de la délivrance du brevet: **13.05.2020**
(21) Numéro de dépôt: 13805857.3
(22) Date de dépôt: 12.12.2013
(51) Int. Cl.: B60L 3/00, H02H 3/46, H02H 3/50, B60L 3/04, B60L 53/14

(54) **PROCEDE DE COMMANDE D'UN CHARGEUR DE BATTERIE DE VEHICULE AUTOMOBILE ET CHARGEUR ASSOCIE**
VERFAHREN ZUR STEUERUNG EINER KRAFTFAHRZEUGBATTERIELADEVORRICHTUNG UND ENTSPRECHENDE LADEVORRICHTUNG
METHOD OF CONTROLLING AN AUTOMOBILE VEHICLE BATTERY CHARGER AND ASSOCIATED CHARGER

(30) Priorité: 20.12.2012 FR 1262469
(43) Date de publication de la demande: 28.10.2015
(73) Titulaire: Renault S.A.S., 92100 Boulogne-Billancourt (FR)
(72) Inventeur: MERIENNE, Ludovic, F-91190 Gif sur Yvette (FR)
(86) Numéro de dépôt international: PCT/EP2013/076401
(87) Numéro de publication internationale: WO 2014/095574

(56) Documents cités:
- EP-A1- 2 477 040
- WO-A1-2010/113936
- DE-A1-102011 016 539
- GB-A- 1 335 701
- US-A1- 2012 147 507

## Description

L'invention a pour domaine technique la commande d'un chargeur de batterie, notamment pour un véhicule automobile et plus particulièrement la commande de sécurité de tels chargeurs.

Lors de la charge de la batterie d'un véhicule électrique ou hybride, des courants intenses transitent du réseau d'alimentation électrique vers la batterie du véhicule. Pour pouvoir charger correctement la batterie, ces courants sont hachés de manière à respecter les contraintes du réseau d'alimentation électrique. Le hachage des courants entraîne l'apparition de courants de fuite qui doivent être évacués par la prise de terre du réseau. Cette terre est reliée au châssis du véhicule et offre donc un chemin à tous les courants parasites.

Avant de lancer la charge de la batterie d'un véhicule, on s'assure que la connexion à la terre soit de bonne qualité. Les documents FR1251168 et FR1254514 enseignent comment déterminer la qualité d'une telle connexion.

Ainsi, on autorise la charge de la batterie d'un véhicule, lorsque la prise de terre est de bonne qualité, et lorsque l'on sait que les courants de fuite circulent bien par le chemin que l'on a créé pour eux, notamment au travers d'un capteur de mesure du courant de fuite.

Les documents WO2012127307 et WO201252366 décrivent l'analyse de courants de fuites lors de la charge de la batterie d'un véhicule.

En pratique, un défaut d'isolation, peut permettre la mise en contact de la phase d'alimentation électrique du véhicule avec la terre via une personne. Ces courants de fuites sont ainsi potentiellement dangereux. On utilise donc des disjoncteurs présents dans l'installation électrique, pour en protéger les utilisateurs. Ces disjoncteurs répondent à une norme et doivent se déclencher s'ils détectent un courant de fuite important à la fréquence du réseau, qui correspond à une fréquence de 50Hz en Europe. Le document WO201230846 décrit de tels disjoncteurs. Certains disjoncteurs peuvent comprendre une mesure du courant de fuite, tels que ceux décrits dans le document WO2012109684. De même le document EP2477040 décrit un dispositif de détection de défaut d'isolation d'un bus d'alimentation et concerne un procédé de commande d'un chargeur de batterie de véhicule automobile, le chargeur étant muni d'un capteur de courant de fuite et étant relié à un réseau d'alimentation électrique par l'intermédiaire d'un disjoncteur comprenant une étape de mesure de la variation de l'amplitude du courant de fuite du chargeur au cours du temps. Le document DE102011016539 décrit un chargeur de véhicule électrique comportant un moyen de détection du courant de fuite utilisant un filtre correctif du facteur de puissance désactivable. Le document US2012/0147507 décrit un dispositif de masquage du courant de fuite. Le document WO2010/113936 décrit un chargeur détectant immédiatement les défauts de terre côté chargeur et les défauts d'isolation côté véhicule. Enfin, le document GB1335701 écrit un circuit de détection de défaut d'isolation dans un pack batterie de véhicule électrique.

Malheureusement, les disjoncteurs peuvent être soumis à un phénomène dit d'aveuglement, au cours duquel dans certaines conditions, le disjoncteur peut ne pas voir un courant de fuite à une fréquence de 50Hz. Les raisons de cet aveuglement peuvent être une composante continue ou des composantes alternatives à haute fréquence très importantes dans le courant de fuite. Une norme donne les niveaux d'aveuglement des disjoncteurs en fonction de leur catégorie.

Il existe donc un besoin pour un système et un procédé de commande d'un chargeur de batterie d'un véhicule automobile, apte à protéger les personnes au contact du véhicule d'une décharge électrique due notamment à un aveuglement des disjoncteurs disposés entre le réseau d'alimentation électrique et le chargeur.

Un objet de l'invention est un procédé de commande d'un chargeur de batterie de véhicule automobile, le chargeur étant muni d'un capteur de courant de fuite et étant relié à un réseau d'alimentation électrique par l'intermédiaire d'un disjoncteur. Le procédé de commande comprend les étapes suivantes, au cours desquelles on mesure la variation de l'amplitude du courant de fuite du chargeur au cours du temps, on détermine l'amplitude des composantes du courant de fuite à différentes fréquences, aptes à générer un aveuglement du disjoncteur en fonction de la variation de l'amplitude du courant de fuite au cours du temps, on détermine si une des composantes du courant de fuite est supérieure à une valeur de seuil associée, et on détermine si l'alimentation électrique du chargeur doit être coupée en fonction du résultat des comparaisons des composantes aux seuils associés.

On peut déterminer les composantes du courant de fuite à différentes fréquences en employant au moins une technique de traitement du signal parmi le filtrage, l'amplification, le redressage et l'écrêtage.

Les composantes du courant de fuite peuvent comprendre une composante continue, une composante à la fréquence de découpage du chargeur, une composante haute fréquence et une composante basse fréquence.

On peut déterminer la composante haute fréquence par application successive d'un filtre passe-bande présentant une bande passante s'étendant d'une première fréquence à une deuxième fréquence supérieure à la première fréquence, d'une amplification variant avec la fréquence, d'un redressement et d'un écrêtage, l'amplification variant progressivement d'une première valeur de gain à la première fréquence jusqu'à une deuxième valeur de gain à une deuxième fréquence, la deuxième valeur de gain étant inférieure à la première valeur.

On peut déterminer la puissance prélevée par le chargeur sur le réseau, et déterminer si la puissance prélevée par le chargeur sur le réseau est inférieure à un seuil de puissance. Si tel est le cas, la valeur de seuil associée à la composante haute fréquence est égale à une première valeur de seuil. Si tel n'est pas le cas, la valeur de seuil associée à la composante haute fréquence est égale à une deuxième valeur de seuil supérieure à la première valeur.

Si au moins l'une des composantes continue, haute fréquence ou à la fréquence de découpage est supérieure au seuil qui lui est associé pendant une durée prédéterminée, on peut interrompre l'alimentation électrique du chargeur.

Si la composante basse fréquence est supérieure au seuil qui lui est associé, on peut interrompre l'alimentation électrique du chargeur.

Un autre objet de l'invention est un chargeur de batterie de véhicule automobile, muni d'un capteur de courant de fuite et capable d'être relié à un réseau d'alimentation électrique par l'intermédiaire d'un disjoncteur. Le chargeur comprend un moyen de détermination de composantes des courants de fuite à différentes fréquences, aptes à générer un aveuglement du disjoncteur. Le moyen de détermination des composantes des courants de fuite peut être connecté à un moyen de comparaison des composantes des courants de fuite à des seuils mémorisés, lui-même connecté à un moyen de coupure de l'alimentation électrique du chargeur en fonction de la comparaison des composantes des courants de fuite aux seuils mémorisés.

Le moyen de détermination des composantes des courants de fuite peut comprendre un moyen de filtrage relié en sortie à un moyen de traitement du signal, apte à amplifier, redresser et écrêter le signal reçu du moyen de filtrage, le moyen de filtrage étant relié en entrée au capteur de mesure du courant de fuite.

Le moyen de comparaison des composantes des courants de fuite à des seuils peut comprendre un comparateur apte à comparer les amplitudes des composantes des courants de fuite reçues du moyen de détermination des composantes des courants de fuite à des seuils enregistrés dans une mémoire.

Le moyen de comparaison des composantes des courants de fuite à des seuils peut comprendre un moyen de détermination de la puissance prélevée par le chargeur sur le réseau, un moyen de comparaison de la puissance prélevée par le chargeur sur le réseau à un seuil de puissance, le moyen de comparaison étant apte à émettre un signal à destination de la mémoire afin de choisir une valeur de seuil à associer à la composante haute fréquence parmi au moins deux valeurs prédéterminées, en fonction du résultat de la comparaison de la puissance prélevée par le chargeur sur le réseau à un seuil de puissance.

D'autres buts, caractéristiques et avantages apparaîtront à la lecture de la description suivante donnée uniquement en tant qu'exemple non limitatif et faite en référence aux dessins annexés sur lesquels :
- la figure 1 illustre les principales étapes du procédé de commande d'un chargeur de batterie, et
- la figure 2 illustre les principaux éléments d'un chargeur de batterie.

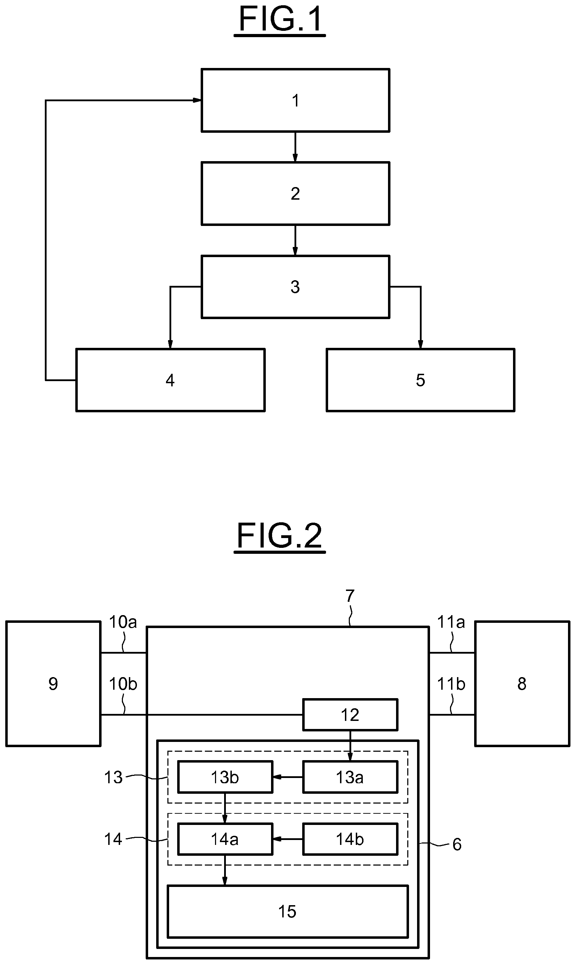

Sur la figure 1, on peut voir les principales étapes d'un procédé de commande d'un chargeur de batterie permettant d'éviter l'aveuglement d'un disjoncteur disposé entre le réseau d'alimentation et le chargeur.

Au cours d'une première étape 1, on mesure la variation de l'amplitude du courant de fuite du chargeur au cours du temps. Le courant de fuite est mesuré au niveau de la connexion de terre entre le chargeur et le réseau d'alimentation.

Au cours d'une deuxième étape 2, on détermine si la mesure du courant de fuite du chargeur comprend des composantes à différentes fréquences, identifiées comme étant susceptibles de générer un aveuglement du disjoncteur. Plus précisément, on détermine l'amplitude de quatre composantes différentes, une composante continue, une composante à haute fréquence, une composante à basse fréquence, et une composante à la fréquence de découpage du chargeur, par exemple à 10kHz, qui représente une autre source de courants de fuite.

On détermine la composante continue par l'application d'un filtre passe-bas dont la bande passante s'étend jusqu'à une fréquence de 1Hz. La valeur ainsi obtenue correspond à la valeur moyenne du courant de fuite, ce qui correspond également à la valeur de la composante continue de ce courant.

On détermine la composante à la fréquence de découpage par application d'un filtre passe bande centré sur la fréquence de découpage (ici 10kHz) et d'une bande passante de inférieure à 10Hz, de sorte que la sélection soit particulièrement précise. Le filtre passe bande permet de conserver la partie du signal correspondant à la fréquence de découpage. La sortie du filtre passe bande est soumis à un redressage et a un écrêtage afin de disposer d'une valeur de la composante qui soit analysable.

On détermine la composante haute fréquence d'une manière similaire à la détermination de la composante à la fréquence de découpage, à l'exception de la bande-passante du filtre qui sera de plusieurs kHz pour cette composante.

Les normes pour les différents types de disjoncteurs dictent différentes amplitudes maximales de courant de fuite pour la composante haute fréquence. Toutefois, quelle que soit la norme de disjoncteur, les points remarquables de la tolérance apparaissent aux mêmes fréquences. L'amplitude de la tolérance quant à elle, dépend de la norme du disjoncteur.

Typiquement, un disjoncteur doit tolérer une amplitude maximale de courant de fuite de 6.6mA à une fréquence de 1kHz et une amplitude maximale de courant de fuite à 66mA à une fréquence 15kHz. On doit donc tenir compte de cet écart d'amplitude en fonction de la fréquence lors de la détermination de la composante haute fréquence.

Ainsi, on détermine la composante haute fréquence par application successive d'un filtre passe-bande présentant une bande passante s'étendant de 500Hz à 50kHz, puis d'une amplification variant avec la fréquence, puis d'un redressement et d'un écrêtage.

L'amplification sélective est réalisée de sorte que l'on multiplie par 10 les amplitudes des courants de fréquences comprises entre 500Hz et 1kHz, le gain d'amplification étant réduit progressivement afin d'obtenir un gain de 1 à une fréquence de 15kHz. Le gain peut par exemple varier linéairement entre 1kHz et 15kHz.

On détermine la composante basse fréquence par application successive d'un filtrage passe-bas dont la bande-passante s'étend jusqu'à 500Hz puis d'un redressage et d'un écrêtage.

Au cours d'une troisième étape 3, on détermine si une des composantes est supérieure à une valeur de seuil associée. Les seuils pour les différentes composantes sont décrits ci-dessous. D'après les normes en vigueur, le courant de fuite pour la composante continue doit être inférieur à 6,6 mA et inférieur à 46 mA pour la composante à la fréquence de découpage, quelle que soit la puissance du disjoncteur considéré.

Toujours d'après les normes en vigueur, le courant de fuite pour la composante haute fréquence doit être inférieur à une première valeur de seuil qui correspond au seuil de tolérance d'un disjoncteur pour une puissance inférieure à 3kW. Une puissance de 3kW constitue une limite supérieure à la puissance d'une charge dite résidentielle (généralement 2kW). Une charge est dite résidentielle, lorsqu'elle est réalisée sur une prise d'une installation domestique, typiquement 220V en Europe.

Toutefois, des charges de plus hautes puissances peuvent être réalisées avec des bornes spécifiques permettant l'alimentation du chargeur. Dans ce cas, la puissance peut atteindre 7, 22 ou 43kW.

Si au cours de la charge, la puissance disponible dépasse les 3kW, on détermine qu'il ne peut pas s'agir d'une charge résidentielle. On enregistre alors le passage à une puissance de charge supérieure jusqu'au débranchement de la prise. On modifie en conséquence le seuil de composante à haute fréquence à une deuxième valeur de seuil correspondant à une charge sur borne.

D'après les normes en vigueur, le courant de fuite pour la composante basse fréquence doit être inférieur à une valeur de seuil de 44mA, quelle que soit la puissance du disjoncteur considéré.

Le procédé se poursuit par une quatrième étape 4, si au moins l'une des composantes continue, haute fréquence ou à la fréquence de découpage est supérieure au seuil qui lui est associé. On informe alors le chargeur de la présence d'une fuite. Si, de plus, la durée écoulée depuis le début du dépassement est de l'ordre de quelques minutes, on coupe l'alimentation du chargeur. Si tel n'est pas le cas, le procédé reprend à l'étape 1.

En effet, les fuites de courant continu, à haut fréquence ou à la fréquence de découpage ne sont pas dangereuses en elles-mêmes. Il est donc inutile de couper la charge instantanément. En revanche, ces fuites témoignent d'un aveuglement potentiel du disjoncteur. Une fuite de courant basse fréquence qui apparaîtrait pourrait ne pas entraîner de coupure. Les courants à basse fréquence étant particulièrement dangereux, une telle situation peut être source d'accident.

Ainsi, si l'aveuglement est de trop longue durée, il convient de couper la charge préventivement car cela signifie qu'il existe un défaut interne au chargeur. Un tel défaut est typiquement un problème de connexion.

Par ailleurs, le procédé se poursuit par une cinquième étape 5, si la composante basse fréquence est supérieure au seuil qui lui est associé. On coupe alors l'alimentation du chargeur, quelle que soit la valeur des autres composantes.

La figure 2 illustre un chargeur 7 de batterie 8 pour véhicule automobile, muni d'un système de commande 6. Le chargeur est de préférence embarqué dans un véhicule automobile, par exemple électrique ou hybride.

Dans l'exemple présenté ici, le chargeur 7 est connecté d'une part à la batterie 8 et d'autre part au réseau d'alimentation électrique 9 par deux connexions, référencées respectivement 11a,11b et 10a,10b. Les connexions comprennent une phase 10a,11a et une connexion de terre 10b,11b. Les courants de fuites inhérents à un tel système bénéficient d'un chemin de retour transitant par les connexions de terre.

Le chargeur 7 comprend un capteur 12 de mesure des courants de fuites.

Le système de commande 6 comprend un moyen de détermination 13 des composantes des courants de fuite, connecté à un moyen de comparaison 14 des composantes des courants de fuite à des seuils lui-même connecté à un moyen de coupure 15 de l'alimentation électrique du chargeur.

Le moyen de détermination 13 des composantes des courants de fuite comprend un moyen de filtrage 13a relié en sortie à un moyen 13b de traitement du signal, apte à amplifier, redresser et écrêter le signal reçu du moyen de filtrage 13a. Le moyen de filtrage 13a est relié en entrée au capteur 12 de mesure du courant de fuite.

Le moyen de comparaison 14 des composantes des courants de fuite à des seuils comprend un comparateur 14a apte à comparer les amplitudes des composantes continue, de fréquence de découpage, haute fréquence et basse fréquence reçues du moyen de détermination 13 des composantes des courants de fuite à des seuils correspondants mémorisés dans une mémoire 14b.

Des signaux logiques sont émis en sortie du comparateur en fonction du résultat de comparaison à destination du moyen de coupure 15 de l'alimentation électrique du chargeur. En fonction des signaux reçus, le moyen de coupure 15 émet un signal d'arrêt de l'alimentation électrique à destination des moyens d'alimentation électrique du chargeur 7, non représentés sur la figure 2.

Comme on l'a vu plus haut, d'une part le chargeur peut potentiellement aveugler le disjoncteur, et d'autre part les fuites de courant à basse fréquence sont particulièrement dangereuses. Dans une telle situation, le chargeur doit se substituer au disjoncteur et s'auto-protéger face aux fuites dangereuses. L'alimentation du chargeur est ainsi coupée le plus rapidement possible, au moins dans les durées de réaction définies par le biais des normes en vigueur.

Avec ce système, un chargeur de batterie d'un véhicule automobile est sécurisé même face à des défaillances du disjoncteur. Pour avoir la meilleure robustesse, la détection est faite en fonction des catégories de disjoncteur identifiées. Le chargeur détecte les fuites dangereuses et peut couper la charge avant que le disjoncteur n'agisse ce qui protège l'installation électrique. Il détecte également la mise en défaut du disjoncteur et peut couper la charge pour protéger l'utilisateur.

## Revendications

1. Procédé de commande d'un chargeur de batterie de véhicule automobile, le chargeur étant muni d'un capteur de courant de fuite et étant relié à un réseau d'alimentation électrique par l'intermédiaire d'un disjoncteur, comprenant les étapes suivantes:
on mesure la variation de l'amplitude du courant de fuite du chargeur au cours du temps, on détermine l'amplitude des composantes du courant de fuite à différentes fréquences, aptes à générer un aveuglement du disjoncteur en fonction de la variation de l'amplitude du courant de fuite au cours du temps,
on détermine si l'une des composantes du courant de fuite est supérieure à une valeur de seuil associée, et
on détermine si l'alimentation électrique du chargeur doit être coupée en fonction du résultat des comparaisons des composantes aux seuils associés.

2. Procédé de commande selon la revendication 1, dans lequel on détermine les composantes du courant de fuite à différentes fréquences en employant au moins une technique de traitement du signal parmi le filtrage, l'amplification, le redressage et l'écrêtage.

3. Procédé de commande selon l'une quelconque des revendications 1 ou 2, dans lequel les composantes du courant de fuite comprennent une composante continue, une composante à la fréquence de découpage du chargeur, une composante haute fréquence et une composante basse fréquence.

4. Procédé de commande selon les revendications 2 et 3, dans lequel on détermine la composante haute fréquence par application successive d'un filtre passe-bande présentant une bande passante s'étendant d'une première fréquence à une deuxième fréquence supérieure à la première fréquence, d'une amplification variant avec la fréquence, d'un redressement et d'un écrêtage, l'amplification variant progressivement d'une première valeur de gain à la première fréquence jusqu'à une deuxième valeur de gain à une deuxième fréquence, la deuxième valeur de gain étant inférieure à la première valeur.

5. Procédé de commande selon la revendication 4, dans lequel on détermine la puissance prélevée par le chargeur sur le réseau,
on détermine si la puissance prélevée par le chargeur sur le réseau est inférieure à un seuil de puissance,
si tel est le cas, la valeur de seuil associée à la composante haute fréquence est égale à une première valeur de seuil,
si tel n'est pas le cas, la valeur de seuil associée à la composante haute fréquence est égale à une deuxième valeur de seuil supérieure à la première valeur.

6. Procédé de commande selon l'une quelconque des revendications 3 à 5, dans lequel si au moins l'une des composantes continue, haute fréquence ou à la fréquence de découpage est supérieure au seuil qui lui est associé pendant une durée prédéterminée, on interrompt l'alimentation électrique du chargeur.

7. Procédé de commande selon l'une quelconque des revendications 3 à 6, dans lequel si la composante basse fréquence est supérieure au seuil qui lui est associé, on interrompt l'alimentation électrique du chargeur.

8. Chargeur de batterie de véhicule automobile, muni d'un capteur de courant de fuite et apte à être relié à un réseau d'alimentation électrique par l'intermédiaire d'un disjoncteur, comprenant
un moyen de mesure la variation de l'amplitude du courant de fuite du chargeur au cours du temps,
un moyen de détermination (13) de composantes des courants de fuite à différentes fréquences,
un moyen de comparaison (14) des composantes des courants de fuite à des seuils mémorisés, et
un moyen de coupure (15) de l'alimentation électrique du chargeur en fonction de la comparaison des composantes des courants de fuite aux seuils mémorisés.

9. Chargeur selon la revendication 8, dans lequel le moyen de détermination (13) des composantes des courants de fuite comprend un moyen de filtrage (13a) relié en sortie à un moyen (13b) de traitement du signal, apte à amplifier, redresser et écrêter le signal reçu du moyen de filtrage (13a), le moyen de filtrage (13a) étant relié en entrée au capteur (12) de mesure du courant de fuite.

10. Chargeur selon l'une quelconque des revendications 8 ou 9, dans lequel le moyen de comparaison (14) des composantes des courants de fuite à des seuils comprend un comparateur (14a) apte à comparer les amplitudes des composantes des courants de fuite reçues du moyen de détermination (13) des composantes des courants de fuite à des seuils enregistrés dans une mémoire (14b).

11. Chargeur selon l'une quelconque des revendications 8 à 10, dans lequel le moyen de comparaison (14) des composantes des courants de fuite à des seuils comprend un moyen de détermination de la puissance prélevée par le chargeur sur le réseau,
un moyen de comparaison de la puissance prélevée par le chargeur sur le réseau à un seuil de puissance,
le moyen de comparaison étant apte à émettre un signal à destination de la mémoire (14b) afin de choisir une valeur de seuil à associer à la composante haute fréquence parmi au moins deux valeurs prédéterminées, en fonction du résultat de la comparaison de la puissance prélevée par le chargeur sur le réseau à un seuil de puissance.

## Patentansprüche

1. Verfahren zur Steuerung einer Kraftfahrzeugbatterieladevorrichtung, wobei die Ladevorrichtung mit einem Fehlerstromsensor versehen ist und über einen Schutzschalter mit einem Stromversorgungsnetz verbunden ist, umfassend die folgenden Schritte:
Messen der Änderung der Amplitude des Fehlerstroms der Ladevorrichtung im Laufe der Zeit,
Bestimmen der Amplitude der Anteile des Fehlerstroms mit unterschiedlichen Frequenzen, die geeignet sind, ein Erblinden des Schutzschalters in Abhängigkeit von der Änderung der Amplitude des Fehlerstroms im Laufe der Zeit zu bewirken,
Bestimmen, ob einer der Anteile des Fehlerstroms über einem zugeordneten Schwellenwert liegt, und
Bestimmen, ob die Stromversorgung der Ladevorrichtung getrennt werden muss, in Abhängigkeit vom Ergebnis der Vergleiche der Anteile mit den zugeordneten Schwellenwerten.

2. Steuerungsverfahren nach Anspruch 1, bei dem die Anteile des Fehlerstroms mit unterschiedlichen Frequenzen bestimmt werden, indem mindestens eine Signalverarbeitungstechnik unter dem Filtern, Verstärken, Gleichrichten und Begrenzen eingesetzt wird.

3. Steuerungsverfahren nach einem der Ansprüche 1 oder 2, bei dem die Anteile des Fehlerstroms einen Gleichstromanteil, einen Anteil mit der Schaltfrequenz der Ladevorrichtung, einen Hochfrequenzanteil und einen Niederfrequenzanteil umfassen.

4. Steuerungsverfahren nach den Ansprüchen 2 und 3, bei dem der Hochfrequenzanteil durch sukzessives Anwenden eines Bandpassfilters mit einem Durchlassband, das sich von einer ersten Frequenz bis zu einer zweiten Frequenz, die höher als die erste ist, erstreckt, einer sich mit der Frequenz ändernden Verstärkung, einer Gleichrichtung und einer Begrenzung bestimmt wird, wobei sich die Verstärkung progressiv von einem ersten Verstärkungsfaktorwert bei der ersten Frequenz bis zu einem zweiten Verstärkungsfaktorwert bei der zweiten Frequenz ändert, wobei der zweite Verstärkungsfaktorwert kleiner als der erste Wert ist.

5. Steuerungsverfahren nach Anspruch 4, bei dem die von der Ladevorrichtung aus dem Netz entnommene Leistung bestimmt wird,
bestimmt wird, ob die von der Ladevorrichtung aus dem Netz entnommene Leistung unter einem Leistungsschwellenwert liegt,
falls dies der Fall ist, der dem Hochfrequenzanteil zugeordnete Schwellenwert gleich einem ersten Schwellenwert ist,
falls dies nicht der Fall ist, der dem Hochfrequenzanteil zugeordnete Schwellenwert gleich einem zweiten Schwellenwert ist, der größer als der erste Wert ist.

6. Steuerungsverfahren nach einem der Ansprüche 3 bis 5, bei dem, wenn mindestens einer der Gleichstrom-, Hochfrequenz- oder Schaltfrequenzanteile während einer vorbestimmten Dauer größer als der ihm zugeordnete Schwellenwert ist, die Stromversorgung der Ladevorrichtung unterbrochen wird.

7. Steuerungsverfahren nach einem der Ansprüche 3 bis 6, bei dem, wenn der Niederfrequenzanteil größer als der ihm zugeordnete Schwellenwert ist, die Stromversorgung der Ladevorrichtung unterbrochen wird.

8. Kraftfahrzeugbatterieladevorrichtung, die mit einem Fehlerstromsensor versehen ist und geeignet ist, über einen Schutzschalter mit einem Stromversorgungsnetz verbunden zu werden, umfassend:
eine Messeinrichtung zum Messen der Änderung der Amplitude des Fehlerstroms der Ladevorrichtung im Laufe der Zeit,
eine Bestimmungseinrichtung (13) zum Bestimmen von Anteilen der Fehlerströme mit unterschiedlichen Frequenzen,
eine Vergleichseinrichtung (14) zum Vergleichen der Anteile der Fehlerströme mit gespeicherten Schwellenwerten und
eine Trenneinrichtung (15) zum Trennen der Stromversorgung der Ladevorrichtung in Abhängigkeit vom Vergleich der Anteile der Fehlerströme mit den gespeicherten Schwellenwerten.

9. Ladevorrichtung nach Anspruch 8, bei der die Bestimmungseinrichtung (13) zum Bestimmen der Anteile der Fehlerströme eine Filtereinrichtung (13a) umfasst, die im Ausgang mit einer Einrichtung (13b) zur Signalverarbeitung verbunden ist, die geeignet ist, das von der Filtereinrichtung (13a) empfangene Signal zu verstärken, gleichzurichten und zu begrenzen, wobei die Filtereinrichtung (13a) im Eingang mit dem Fehlerstrommesssensor (12) verbunden ist.

10. Ladevorrichtung nach einem der Ansprüche 8 oder 9, bei der die Vergleichseinrichtung (14) zum Vergleichen der Fehlerstromanteile mit Schwellenwerten einen Komparator (14a) umfasst, der geeignet ist, die vom Bestimmungsmittel (13) empfangenen Amplituden der Anteile der Fehlerströme mit Schwellenwerten zu vergleichen, die in einem Speicher (14b) aufgezeichnet sind.

11. Ladevorrichtung nach einem der Ansprüche 8 bis 10, bei der die Vergleichseinrichtung (14) zum Vergleichen der Anteile der Fehlerströme mit Schwellenwerten eine Einrichtung zum Bestimmen der von der Ladevorrichtung aus dem Netz entnommenen Leistung umfasst,
eine Vergleichseinrichtung zum Vergleichen der von der Ladevorrichtung aus dem Netz entnommenen Leistung mit einem Leistungsschwellenwert,
wobei die Vergleichseinrichtung geeignet ist, ein Signal an den Speicher (14b) zu senden, um in Abhängigkeit vom Ergebnis des Vergleichs der von der Ladevorrichtung aus dem Netz entnommen Leistung mit einem Leistungsschwellenwert unter mindestens zwei vorbestimmten Werten einen Schwellenwert zu wählen, der dem Hochfrequenzanteil zuzuordnen ist.

## Claims

1. Method for controlling a motor vehicle battery charger, the charger being provided with a leakage current sensor and being connected to a power supply network via a circuit breaker, said method comprising the following steps:
measuring the variation over time in the amplitude of the leakage current of the charger, determining the amplitude of the components of the leakage current that have different frequencies and are capable of causing the circuit breaker to be blinded depending on the variation over time in the amplitude of the leakage current,
determining whether one of the components of the leakage current is above an associated threshold value, and
determining whether the supply of power to the charger should be disconnected on the basis of the result of the comparisons of the components with the associated thresholds.

2. Control method according to Claim 1, wherein the components of the leakage current that have different frequencies are determined using at least one signal processing technique from among filtering, amplification, rectification and clipping.

3. Control method according to either one of Claims 1 and 2, wherein the components of the leakage current comprise a DC component, a component whose frequency is the chopping frequency of the charger, a high-frequency component and a low-frequency component.

4. Control method according to Claims 2 and 3, wherein the high-frequency component is determined by successively applying a bandpass filter that has a passband extending from a first frequency to a second frequency higher than the first frequency, amplification that varies with the frequency, rectification and clipping, the amplification varying progressively from a first gain value at the first frequency to a second gain value at a second frequency, the second gain value being lower than the first value.

5. Control method according to Claim 4, wherein the power drawn from the network by the charger is determined,
it is determined whether the power drawn from the network by the charger is below a power threshold, if so, the threshold value associated with the high-frequency component is equal to a first threshold value,
if not, the threshold value associated with the high-frequency component is equal to a second threshold value higher than the first value.

6. Control method according to any one of Claims 3 to 5, wherein if at least one of the DC, high-frequency and chopping-frequency components is above the threshold associated with it for a predetermined period of time, the supply of power to the charger is interrupted.

7. Control method according to any one of Claims 3 to 6, wherein if the low-frequency component is above the threshold associated with it, the supply of power to the charger is interrupted.

8. Motor vehicle battery charger provided with a leakage current sensor and capable of being connected to a power supply network via a circuit breaker, comprising
a means for measuring the variation over time in the amplitude of the leakage current of the charger,
a means (13) for determining components of the leakage currents that have different frequencies,
a means (14) for comparing the components of the leakage currents with stored thresholds, and
a means (15) for disconnecting the supply of power to the charger on the basis of the comparison of the components of the leakage currents with the stored thresholds.

9. Charger according to Claim 8, wherein the means (13) for determining the components of the leakage currents comprises a filtering means (13a), the output of which is connected to a signal processing means (13b) capable of amplifying, rectifying and clipping the signal received from the filtering means (13a), the input of the filtering means (13a) being connected to the sensor (12) for measuring the leakage current.

10. Charger according to either one of Claims 8 and 9, wherein the means (14) for comparing the components of the leakage currents with thresholds comprises a comparator (14a) capable of comparing the amplitudes of the components of the leakage currents, which are received from the means (13) for determining the components of the leakage currents, with thresholds recorded in a memory (14b).

11. Charger according to any one of Claims 8 to 10, wherein the means (14) for comparing the components of the leakage currents with thresholds comprises a means for determining the power drawn from the network by the charger,
a means for comparing the power drawn from the network by the charger with a power threshold,
the comparing means being capable of transmitting a signal to the memory (14b) in order to select a threshold value to be associated with the high-frequency component from among at least two predetermined values on the basis of the result of the comparison of the power drawn from the network by the charger with a power threshold.
